# EUROPÄISCHE PATENTSCHRIFT

(11) **EP 0 710 069 B1**
(45) Veröffentlichungstag und Bekanntmachung des Hinweises auf die Patenterteilung: **17.09.1997**
(21) Anmeldenummer: 94920896.1
(22) Anmeldetag: 20.07.1994
(51) Int. Cl.: A01K 1/015

(54) **TIERSTREU UND VERFAHREN ZU DEREN HERSTELLUNG**
ANIMAL LITTER AND PROCESS FOR PRODUCING IT
LITIERE POUR ANIMAUX ET SON PROCEDE DE FABRICATION

(30) Priorität: 20.07.1993 DE 4324297; 23.08.1993 DE 4328285
(43) Veröffentlichungstag der Anmeldung: 08.05.1996
(73) Patentinhaber: EFFEM GmbH, D-27283 Verden (DE)
(72) Erfinder: LANG, Rüdiger, D-56321 Brey (DE); SCHLIMM, Peter, D-56410 Montaubaur (DE); LANGE, Dietmar, D-56179 Vallendar (DE); HORNIG, Rolf, D-27308 Kirchlinteln-Luttum (DE)
(74) Vertreter: Goddar, Heinz J., Dr.
(86) Internationale Anmeldenummer: DE9400845
(87) Internationale Veröffentlichungsnummer: WO9502956

(56) Entgegenhaltungen:
- DE-A- 2 843 518
- DE-A- 4 109 590
- US-A- 5 207 830

## Beschreibung

Die Erfindung betrifft eine Tierstreu nach dem Oberbegriff von Anspruch 1 sowie ein Verfahren zur Herstellung dieser Tierstreu.

Eine bekannte Tierstreu der vorstehend beschriebenen Art besteht aus Partikeln, die gänzlich aus anorganischem, mineralischen Material in Granulatform aufgebaut sind. Dabei kann es sich sowohl um Granulate auf Calciumsilikathydratbasis handeln als auch um solche auf tonmineralischer Basis. Diese Produkte haben sich durchaus bewahrt, wobei allerdings die Wasseraufnahmefähigkeit und insbesondere die Geruchsbindung noch als verbesserungsfähig erscheinen.

Ferner sind auch Tierstreumaterialien bekannt, bei denen die einzelnen Patikel in wesentlichen aus organischem Material, wie aufbereitetem Altpapier oder dergleichen, bestehen. Bei diesen Materialien kommt es bei hoher Feuchtigkeitsaufnahme oft zu Problemen bei der Geruchsbindung.

Aus der US-A-5,207,830 ist ein Material und dessen Verwendung als Tierstreu bekannt, bei dem die Partikel aus einer Mischung aus u.a. Vermiculit, d.h. einem blättchenförmigen, mineralischen Material, und Abfallcellulose, d.h. einem feuchtigkeitsabsorbierenden, organischen Material bestehen können. Beide Materialien werden in ihrer Eigenschaft als feuchtigkeitsabsorbierendes Material eingesetzt, entweder einzeln oder in Kombination. Dieses feuchtigkeitsabsorbierende Material wird gemäß dem in der Entgegenhaltung beschriebenen Verfahren mit einem zementartigen Material, insbesondere Portland-Zement, umhüllt.

Der Erfindung liegt die Aufgabe zugrunde, eine Tierstreu der gattungsgemäßen Art zu schaffen, welche bei hoher Wasseraufnahmefähigkeit und guter Geruchsbindung über positive Umwelteigenschaften verfügt. Ferner soll ein Verfahren zur Herstellung einer derartigen Tierstreu angegeben werden.

Erfindungsgemäß wird diese Aufgabe durch eine gattungsgemäß Tierstreu mit den Merkmalen des Kennzeichens von Anspruch 1 gelöst.

Dabei kann vorgesehen sein, daß der Anteil des mineralischen Materials in den Partikeln zwischen 5 und 25 Gew.-% liegt.

Erfindungsgemäß ist besonders bevorzugt, daß das mineralische Material im wesentlichen aus visuell als Blättchen erkennbaren Teilchen (Makroblättchen) besteht, wobei dieses bevorzugt ein Verhältnis von Längsausdehnung zu Dicke von mindestens 10:1 aufweisen.

Als besonders bevorzugtes mineralisches Material wird ein solches angesehen, daß aus Glimmern und zu Glimmer ähnlichen Mineralen ausgewählt ist, wie beispielsweise Vermiculit, besonders bevorzugt expandiertes Vermiculit, am bevorzugtesten ein solches, das auf < 2 mm zerkleinert ist.

Die Erfindung schlägt vor, daß die Partikel im wesentlichen gleichmäßig verteilt einen Geruchsbinder umfassen, wobei dieser bevorzugt MgCl₂, NaCl und/oder CaCl₂ umfaßt.

Erfindungsgemäß ist besonders bevorzugt vorgesehen, daß das feuchtigkeitsabsorbierende, organische Material Cellulose unfaßt, besonders bevorzugt zerkleinerte Cellulose in einer Fraktion < 1.500 µm Faserlänge.

Die Erfindung schlägt vor, daß die Partikel ein anorganisches und/oder organisches Bindemittel umfassen, das besonders bevorzugt Bentonit ist.

Dabei kann vorgesehen sein, daß der Partikelmantel auf dem Partikelkern durch ein Bindemittel fixiert ist, wobei dieses Bindemittel Bentonit umfassen kann.

Ein erfindungsgemäß gegebenenfalls vorhandener Geruchsbinder kann bevorzugt im wesentlichen gleichmäßig im Partikelkern verteilt sein.

Die Erfindung sieht vor, daß die einzelnen Partikel im wesentlichen rundlich-ovale Form besitzen. Dabei schlägt die Erfindung vor, daß die Partikel eine Korngröße von 0,5 bis 8 mm, bevorzugt eine Korngröße von 3,3 bis 6,5 mm besitzen.

Das bevorzugte Schüttgewicht der erfindungsgemäßen Tierstreu liegt 350 - 450 g/l.

Die bevorzugte Restfeuchte der erfindungsgemäßen Tierstreu liegt bei 5 - 15 Gew.-%.

Das bevorzugte Wasseraufnahmevermögen der erfindungsgemäßen Tierstreu liegt bei 100 - 200 Gew.-%.

Der bevorzugte pH-Wert der erfindungsgemäßen Tierstreu liegt bei 7 - 9.

Das erfindungsgemäße Verfahren zur Herstellung einer Tierstreu mit Partikeln, die aus den zuvor beschriebenen Partikelkernen und Partikelmänteln bestehen, zeichnet sich dadurch aus, daß zunächst durch Pelletieren die Partikelkerne hergestellt werden; und daß anschließend die Partikelkerne mit dem Partikelmantel beschichtet werden.

Dabei kann vorgesehen sein, daß bei Einsatz eines Geruchsbinders dieser beim Pelletieren in die Partikelkerne eingearbeitet wird.

Bevorzugt wird dabei vorgeschlagen, daß als Pelletierhilfsmittel eine geruchsbindehaltige Lösung eingesetzt wird, wobei diese insbesondere eine MgCl₂-Lösung sein kann, noch bevorzugter eine 33 %ige MgCl₂Lösung mit einem Anteil von 10 - 35 Gew.-%, bezogen auf die Masse des zu pelletierenden Partikelkernmaterials.

Alternativ kann vorgesehen sein, daß der Geruchsbinder in fester (Salz)-Form beim Pelletieren in die Partikelkerne eingearbeitet wird.

Der Erfindung liegt die überraschende Erkenntnis zugrunde, daß es gelingt, die gestellte Aufgabe zu lösen und eine umweltgerechte Tierstreu mit hervorragenden Gebrauchseigenschaften zu schaffen, indem ein feuchtigkeitsabsorbierendes, organisches Material und ein blättchenförmiges, mineralisches Material in Partikeln in einem Aufbau, wie in Anspruch 1 definiert, zur Verfügung gestellt werden.

Bei Verwendung von Tierstreupartikeln, bei denen das feuchtigkeitsabsorbierende, organische Material sich im Partikelkern befindet und von dem blättchenförmigen, mineralischen Material in Form eines Partikelmantels umgeben ist, ergibt sich ein besonderer geometrischer Abdeckeffekt durch das blättchenförmige Material. Der Partikelkern, der aus dem feuchtigkeitsabsorbierenden, organischen Material, wie etwa Cellulose, allein oder in Vermischung mit dem blättchenförmigen, mineralischen Material, wie etwa Vermiculit, bestehen kann, besitzt eine hervorragende Wasseraufnahmefähigkeit und trägt, wenn er mit dem blättchenförmigen, mineralischen Material und ggf. zusätzlich noch mit einem Geruchsbinder versehen ist, wie dies vorzugsweise vorgesehen ist, selbst bereits zur Geruchsbindung bei.

Das als Partikelmantel aufgebrachte blättchenförmige, mineralische Material, kann - insbesondere wenn es in Form von Makroblättchen vorliegt - den Partikelkern in sehr dünnen Schichten umgeben, die in den Zwischenräume für ankommende Feuchtigkeit durchlässig sind. Im Gegensatz zu nichtblättchenförmigem Material ergibt sich der besondere Vorteil, daß besonders kurze Durchtrittswege der Feuchtigkeit zum feuchtigkeitsabsorbierenden, organischen Material im Kern gewährleistet sind, wohingegen sich bei Verwendung von partikelförmigem Material längere, oft kanalförmige Durchlässe ergeben, die die Feuchtigkeitsaufnahme insgesamt verzögern und behindern.

In Folge der Sperrwirkung des Partikelmantels kann Geruch aus dem Partikelkern anschließend nur schwer wieder nach außen dringen. Außerdem gewährleistet der Partikelmantel in Folge seines Aufbaus aus mineralischem Material eine hohe Sicherheit gegen ein Klebrigwerden der Partikel, so daß keine Gefahr besteht, daß die Tierstreu z.B. von einer Katze in der Wohnung herumgetragen wird.

Die erfindungsgemäße Tierstreu ist aufgrund ihrer Bestandteile in hohem Maße bioverträglich und kann problemlos über die Toilette oder den Kompost entsorgt werden. Die einzelnen Partikel sind - insbesondere bei Verwendung eines Partikelmantels aus blättchenförmigem, mineralischen Material - praktisch staubfrei. Ebenfalls ein besonderer Vorteil eines erfindungsgemäß aufgebauten Partikelmantels ist die Farbe der Tierstreu, da durch den Partikelmantel der Kern im wesentlichen unsichtbar gemacht wird und die Farbe der Tierstreu durch Totalreflexion weitgehend dem eingesetzten blättchenförmigen, mineralischen Material entspricht und dementsprechend vorzugsweise beige-braun/gold-glänzend ist.

Weitere Merkmale und Vorteile der Erfindung ergeben sich aus der nachstehenden Beschreibung, in der Ausführungsbeispiele im einzelnen erläutert sind.

### Beispiel 1:

44,8 Gewichsprozent Rohcellulose der Fraktion einer Faserlänge von < 1.500 µm, 37,2 Gewichtsprozent Bentonit und 9,15 Gew.-% MgCl₂ in Form einer 33%igen wässrigen Lösung wurden in einen handelsüblichen Eirich-Mischer pelletiert. Anschließend wurden die einzelnen Partikelkerne mit einem Partikelmantel gecoatet, wiederum in Eirich-Mischer, wobei das Rohmaterial für den Partikelmantel 7 Gewichtsprozent Vermiculit und 1,85 Gew.-% Bindemittel (Bentonit), Rest Wasser, aufwies.

Die so hergestellte Tierstreu hatte ein Schüttgewicht von 400 g/l, eine Wasseraufnahme von 100 Gew.-%, eine Restfeuchte von 10, einen pH-Wert von 8 und eine Korngröße von 3,4 bis 5,2 mm, wobei die Körner rundlich-oval waren. Die Farbe war beige-braun bis gold-glänzend, die Geruchsbindung betrug über 7 Tage weniger als 100 ppm (STIWA-Methode).

### Beispiel 2:

Es wurde wie in Beispiel 2 gearbeitet, wobei aber als Geruchsbinder 9,15 Gewichtsprozent MgCl₂ und 3,15 Gewichtsprozent NaCl eingesetzt wurden, und zwar beide in fester Form, unter Verwendung von Wasser als Pelletierhilfsmittel.

Die Eigenschaften des so erhaltenen Produktes waren wie folgt: Schüttgewicht 330 g/l, Wasseraufnahme 170 Gew.-%, Restfeuchte 12 Gew.-%, pH-Wert 7,3, Korngröße 1,2 bis 4,3 mm, Kornform rundlich-oval, Farbe gold-glänzend bis beige-braun. Die Geruchsbindung ergab sich zu < 100 ppm über 6 Tage (STIWA-Methode).

## Patentansprüche

1. Tierstreu, insbesondere Katzenstreu, aus oder mit einem Anteil an Partikeln, die mindestens ein feuchtigkeitsabsorbierendes, organisches Material und mindestens ein blättchenförmiges, mineralisches Material umfassen, dadurch gekennzeichnet, daß die einzelnen Partikel jeweils einen Partikelkern, der das feuchtigkeitsabsorbierende, organische Material und gegebenenfalls einen Teil des blättchenförmigen, mineralischen Materials umfaßt, und einen den Partikelkern im wesentlichen vollständig umgebenden Partikelmantel, der das blättchenförmige, mineralische Material umfaßt, aufweisen.

2. Tierstreu nach Anspruch 1, dadurch gekennzeichnet, daß der Anteil des mineralischen Materials in den Partikeln zwischen 5 und 25 Gew.-% liegt.

3. Tierstreu nach Anspruch 1 oder 2, dadurch gekennzeichnet, daß das mineralische Material im wesentlichen aus visuell als Blättchen erkennbaren Teilchen (Makroblättchen) besteht.

4. Tierstreu nach Anspruch 3, dadurch gekennzeichnet, daß die Blättchen ein Verhältnis Von Längsausdehnung zu Dicke von mindestens 10:1 aufweisen.

5. Tierstreu nach einen der Ansprüche 1 bis 4, dadurch gekennzeichnet, daß das mineralische Material ausgewählt ist aus Glimmern und zu Glimmer ähnlichen Mineralen.

6. Tierstreu nach Anspruch 5, dadurch gekennzeichnet, daß das mineralische Material Vermiculit umfaßt.

7. Tierstreu nach Anspruch 6, dadurch gekennzeichnet, daß das Vermiculit expandiertes Vermiculit ist.

8. Tierstreu nach Anspruch 7, dadurch gekennzeichnet, daß das Vermiculit auf < 2 mm zerkleinert ist.

9. Tierstreu nach einem der vorangehenden Ansprüche, dadurch gekennzeichnet, daß die Partikel in wesentlichen gleichmäßig verteilt einen Geruchsbinder umfassen.

10. Tierstreu nach Anspruch 9, dadurch gekennzeichnet, daß der Geruchsbinder MgCl₂ umfaßt.

11. Tierstreu nach Anspruch 9 oder 10, dadurch gekennzeichnet, daß der Geruchsbinder NaCl umfaßt.

12. Tierstreu nach einem der Ansprüche 9 bis 11, dadurch gekennzeichnet, daß der Geruchsbinder CaCl₂ umfaßt.

13. Tierstreu nach einem der vorangehenden Ansprüche, dadurch gekennzeichnet, daß das feuchtigkeitsabsorbierende organische Material Cellulose umfaßt.

14. Tierstreu nach Anspruche 13, dadurch gekennzeichnet, daß die Cellulose zerkleinerte Cellulose in einer Fraktion < 1500 µm Faserlänge ist.

15. Tierstreu nach einem der vorangehenden Ansprüche, dadurch gekennzeichnet, daß die Partikel ein anorganisches und/oder organisches Bindemittel umfassen.

16. Tierstreu nach Anspruch 15, dadurch gekennzeichnet, daß das Bindemittel Bentonit umfaßt.

17. Tierstreu nach einem der vorangehenden Ansprüche, dadurch gekennzeichnet, daß der Partikelmantel auf dem Partikelkern durch ein Bindemittel fixiert ist.

18. Tierstreu nach Anspruch 17, dadurch gekennzeichnet, daß das Bindemittel Bentonit umfaßt.

19. Tierstreu nach einem der vorangehenden Ansprüche, dadurch gekennzeichnet, daß der gegebenenfalls vorhandene Geruchsbinder im wesentlichen gleichmäßig im Partikelkern verteilt ist.

20. Tierstreu nach einem der vorangehenden Ansprüche, dadurch gekennzeichnet, daß die einzelnen Partikel im wesentlichen rundlich-ovale Form besitzen.

21. Tierstreu nach einem der vorangehenden Ansprüche, dadurch gekennzeichnet, daß die Partikel eine Korngröße von 0,5 bis 8 mm besitzen.

22. Tierstreu nach Anspruch 21, dadurch gekennzeichnet, daß die Partikel eine Korngröße von 3,3 bis 6,5 mm besitzen.

23. Tierstreu nach einem der vorangehenden Ansprüche, gekennzeichnet durch ein Schüttgewicht von 350 - 450 g/l.

24. Tierstreu nach einem der vorangehenden Ansprüche, gekennzeichnet durch eine Restfeuchte von 5 - 15 Gew.-%.

25. Tierstreu nach einem der vorangehenden Ansprüche, gekennzeichnet durch ein Wasseraufnahmevermögen von 100 - 200 Gew.-%.

26. Tierstreu nach einem der vorangehenden Ansprüche, gekennzeichnet durch einen pH-Wert von 7 bis 9.

27. Verfahren zur Herstellung einer Tierstreu nach einem der Ansprüche 1 bis 26, dadurch gekennzeichnet, daß zunächst durch Pelletieren die Partikelkerne hergestellt werden; und daß anschließend die Partikelkerne mit dem Partikelmantel beschichtet werden.

28. Verfahren nach Anspruch 27, dadurch gekennzeichnet, daß bei Einsatz eines Geruchsbinders dieser beim Pelletieren in die Partikelkerne eingearbeitet wird.

29. Verfahren nach Anspruch 28, dadurch gekennzeichnet, daß als Pelletierhilfsmittel eine geruchsbinderhaltige Lösung eingesetzt wird.

30. Verfahren nach Anspruch 29, dadurch gekennzeichnet, daß als Pelletierhilfsmittel eine MgCl₂-Lösung eingesetzt wird.

31. Verfahren nach Anspruch 30, dadurch gekennzeichnet, daß als Pelletierhilfsmittel eine 33%ige MgCl₂-Lösung in einem Anteil von 10 bis 35 Gew.-%, bezogen auf die Masse des zu pelletierenden Partikelkernmaterials, eingesetzt wird.

32. Verfahren nach Anspruch 28, dadurch gekennzeichnet, daß der Geruchsbinder in fester (Salz)-Form beim Pelletieren in die Partikelkerne eingearbeitet wird.

## Claims

1. Animal litter, in particular cat litter, composed of or containing a proportion of particles which comprise at least one moisture-absorbing organic material and at least one flake-like inorganic material, characterized in that the individual particles each have a particle core, which comprises the moisture-absorbing organic material, and optionally some of the flake-like inorganic material, and a particle shell which substantially fully surrounds the particle core and comprises the flake-like inorganic material.

2. Animal litter according to Claim 1, characterized in that the proportion of the inorganic material in the particles is between 5 and 25% by weight.

3. Animal litter according to Claim 1 or 2, characterized in that the inorganic material essentially consists of particles (macroflakes) visibly recognisable as flakes.

4. Animal litter according to Claim 3, characterized in that the flakes have a ratio of length dimension to thickness of at least 10:1.

5. Animal litter according to one of Claims 1 to 4, characterized in that the inorganic material is chosen from micas and minerals similar to mica.

6. Animal litter according to Claim 5, characterized in that the inorganic material comprises vermiculite.

7. Animal litter according to Claim 6, characterized in that the vermiculite is expanded vermiculite.

8. Animal litter according to Claim 7, characterized in that the vermiculite is comminuted to < 2 mm.

9. Animal litter according to one of the preceding claims, characterized in that the particles comprise an odour-binding agent with essentially uniform distribution.

10. Animal litter according to Claim 9, characterized in that the odour-binding agent comprises MgCl₂.

11. Animal litter according to Claim 9 or 10, characterized in that the odour-binding agent comprises NaCl.

12. Animal litter according to one of Claims 9 to 11, characterized in that the odour-binding agent comprises CaCl₂.

13. Animal litter according to one of the preceding claims, characterized in that the moisture-absorbing organic material comprises cellulose.

14. Animal litter according to Claim 13, characterized in that the cellulose is comminuted cellulose in a fraction < 1500 µm in terms of fibre length.

15. Animal litter according to one of the preceding claims, characterized in that the particles comprise an inorganic and/or organic binder.

16. Animal litter according to Claim 15, characterized in that the binder comprises bentonite.

17. Animal litter according to one of the preceding claims, characterized in that the particle shell is fixed on the particle core by a binder.

18. Animal litter according to Claim 17, characterized in that the binder comprises bentonite.

19. Animal litter according to one of the preceding claims, characterized in that the optionally present odour-binding agent is distributed essentially uniformly in the particle core.

20. Animal litter according to one of the preceding claims, characterized in that the individual particles essentially have a round-oval shape.

21. Animal litter according to one of the preceding claims, characterized in that the particles have a particle size of 0.5 to 8 mm.

22. Animal litter according to Claim 21, characterized in that the particles have a particle size of 3.3 to 6.5 mm.

23. Animal litter according to one of the preceding claims, characterized by a bulk density of 350 - 450 g/l.

24. Animal litter according to one of the preceding claims, characterized by a residual moisture content of 5 - 15% by weight.

25. Animal litter according to one of the preceding claims, characterized by a water absorbtion capacity of 100 - 200% by weight.

26. Animal litter according to one of the preceding claims, characterized by a pH of 7 to 9.

27. Method for producing a cat litter according to one of Claims 1 to 26, characterized in that the particle cores are firstly produced by pelletizing, and in that the particle cores are subsequently coated with the particle shell.

28. Method according to Claim 27, characterized in that, when an odour-binding agent is used, it is incorporated in the particle cores during the pelletization.

29. Method according to Claim 28, characterized in that a solution that contains odour-binding agent is used as pelletizing aid.

30. Method according to Claim 29, characterized in that a solution of MgCl₂ is used as pelletizing aid.

31. Method according to Claim 30, characterized in that a 33% strength solution of MgCl₂ is used as pelletizing aid, in a proportion of 10 to 35% by weight relative to the mass of the particle-core material to be pelletized.

32. Method according to Claim 28, characterized in that the odour-binding agent is incorporated in the particle cores in solid (salt) form during the pelletization.

## Revendications

1. Litière pour animaux, en particulier litière pour chats, constituée au moins en partie de particules, qui comportent au moins une matière organique absorbant l'humidité et au moins une matière minérale en forme de lamelles, caractérisée en ce que les particules isolées ont chacune un noyau de particule qui comporte la matière organique absorbant l'humidité et éventuellement une partie de la matière minérale en forme de lamelles, et un revêtement de particule entourant essentiellement totalement le noyau de particule, ce revêtement comportant la matière minérale en forme de lamelles.

2. Litière pour animaux selon la revendication 1, caractérisée en ce que la quantité de matière minérale dans les particules est entre 5 et 25 % en poids.

3. Litière pour animaux selon la revendication 1 ou 2, caractérisée en ce que la matière minérale est constituée essentiellement de particules se caractérisant visuellement comme des lamelles (macro-lamelles).

4. Litière pour animaux selon la revendication 3, caractérisée en ce que les lamelles présentent un rapport entre la longueur et l'épaisseur d'au moins 10:1.

5. Litière pour animaux selon l'une des revendications 1 à 4, caractérisée en ce que la matière minérale est choisie parmi les micas et les minéraux analogues aux micas.

6. Litière pour animaux selon la revendication 5, caractérisée en ce que la matière minérale comporte de la vermiculite.

7. Litière pour animaux selon la revendication 6, caractérisée en ce que la vermiculite est de la vermiculite expansée.

8. Litière pour animaux selon la revendication 7, caractérisée en ce que la vermiculite est broyée à une dimension inférieure à 2 mm.

9. Litière pour animaux selon l'une des revendications précédentes, caractérisée en ce que les particules sont réparties de façon essentiellement régulière et comportent un absorbant d'odeur.

10. Litière pour animaux selon la revendication 9, caractérisée en ce que l'absorbant d'odeur comporte MgCl₂.

11. Litière pour animaux selon la revendication 9 ou 10, caractérisée en ce que l'absorbant d'odeur comporte NaCl.

12. Litière pour animaux selon l'une des revendications 9 à 11, caractérisée en ce que l'absorbant d'odeur comporte CaCl₂.

13. Litière pour animaux selon l'une des revendications précédentes, caractérisée en ce que la matière organique absorbant l'humidité comporte de la cellulose.

14. Litière pour animaux selon la revendication 13, caractérisée en ce que la cellulose est une cellulose broyée dans une fraction dont la longueur des fibres est inférieure à 1500 µm.

15. Litière pour animaux selon l'une des revendications précédentes, caractérisée en ce que les particules comportent un liant inorganique et/ou organique.

16. Litière pour animaux selon la revendication 15, caractérisée en ce que l'agent de liaison comporte de la bentonite.

17. Litière pour animaux selon l'une des revendications précédentes, caractérisée en ce que le revêtement des particules est fixé sur le noyau des particules par un agent de liaison.

18. Litière pour animaux selon la revendication 17, caractérisée en ce que l'agent de liaison comporte de la bentonite.

19. Litière pour animaux selon l'une des revendications précédentes, caractérisée en ce que l'absorbant d'odeur éventuellement présent est distribué de façon essentiellement régulière dans le noyau des particules.

20. Litière pour animaux selon l'une des revendications précédentes, caractérisée en ce que les particules isolées ont une forme essentiellement ronde-ovale.

21. Litière pour animaux selon l'une des revendications précédentes, caractérisée en ce que les particules ont une taille de grain de 0,5 à 8 mm.

22. Litière pour animaux selon la revendication 21, caractérisée en ce que les particules ont une taille de grain de 3,3 à 6,5 mm.

23. Litière pour animaux selon l'une des revendications précédentes, caractérisée par un poids de matière non tassée de 350-450 g/l.

24. Litière pour animaux selon l'une des revendications précédentes, caractérisée par une humidité résiduelle de 5-15 % en poids.

25. Litière pour animaux selon l'une des revendications précédentes, caractérisée par une capacité de reprise d'humidité de 100-200 % en poids.

26. Litière pour animaux selon l'une des revendications précédentes, caractérisée par une valeur de pH de 7 à 9.

27. Procédé pour préparer une litière pour animaux selon l'une des revendications 1 à 26, caractérisé en ce que les noyaux des particules sont préparés tout d'abord par pelletisation, et ensuite les noyaux des particules sont recouverts avec le revêtement de particule.

28. Procédé selon la revendication 27, caractérisé en ce que l'on utilise un absorbant d'odeur, qui est introduit par pelletisation dans les noyaux des particules.

29. Procédé selon la revendication 28, caractérisé en ce que l'on utilise comme agent de liaison de la pelletisation une solution comportant un absorbant d'odeur.

30. Procédé selon la revendication 29, caractérisé en ce que, comme agent de liaison de la pelletisation, on utilise une solution de MgCl₂.

31. Procédé selon la revendication 30, caractérisé en ce que l'on utilise, comme agent de liaison de la pelletisation, une solution à 33 % de MgCl₂ dans une quantité de 10 à 35 % en poids, calculé sur le poids de la matière du noyau des particules que l'on veut transformer en granulés.

32. Procédé selon la revendication 28, caractérisé en ce que l'agent absorbant les odeurs est introduit sous forme solide (sel) lors de la pelletisation dans les noyaux des particules.
